# EUROPÄISCHE PATENTSCHRIFT

(11) **EP 3 912 693 B1**
(45) Veröffentlichungstag und Bekanntmachung des Hinweises auf die Patenterteilung: **26.06.2024**
(21) Anmeldenummer: 20187175.3
(22) Anmeldetag: 22.07.2020
(51) Int. Cl.: A63B 21/00, F16M 13/00

(54) **VORRICHTUNG ZUR HALTERUNG EINES HANDYS ODER TABLETS AN EINEM ÜBUNGSGERÄT FÜR KOPF-, HAND- UND SCHULTERSTANDÜBUNGEN**
DEVICE FOR HOLDING A MOBILE PHONE OR TABLET ON AN EXERCISE DEVICE FOR HEAD, HAND AND SHOULDER EXERCISES
DISPOSITIF DE MAINTIEN D'UN TÉLÉPHONE MOBILE OU D'UNE TABLETTE SUR UN APPAREIL D'EXERCICE DESTINÉ AUX EXERCICES DE POSTURES TÊTE, MAINS ET ÉPAULES AU SOL

(30) Priorität: 18.05.2020 DE 202020102802 U
(43) Veröffentlichungstag der Anmeldung: 24.11.2021
(73) Patentinhaber: Trenkle & Trenkle GbR, 87459 Pfronten (DE)
(72) Erfinder: Trenkle, Kilian, 87459 Pfronten (DE)
(74) Vertreter: Charrier Rapp & Liebau

(56) Entgegenhaltungen:
- AT-U2- 13 263
- DE-U1-202010 005 177
- US-A- 4 133 524
- US-A1- 2009 289 166
- US-A1- 2014 097 319
- US-A1- 2015 189 781

## Beschreibung

Die Erfindung betrifft eine Vorrichtung zur Halterung eines Handys oder Tablets an einem Übungsgerät für Kopf-, Hand- und Schulterstandübungen. Die Erfindung betrifft außerdem ein Übungsgerät mit einer derartigen Vorrichtung zur Halterung eines Handys oder Tablets.

In der US 2015/0189781 A1 ist eine gattungsgemäße Vorrichtung zur Halterung eines Handys oder Tablets offenbart. Diese Haltevorrichtung weist einen als Dreiecksprisma ausgebildeten Haltekörper mit einer unteren Auflagefläche, einer geneigten vorderen Auflage und einer zur vorderen Auflage entgegengesetzt geneigten hinteren Auflage zur Halterung des Handys oder Tablets auf.

Aus der DE 20 2012 102 911 U1 ist ein Übungsgerät für Kopf-, Hand- und Schulterstandübungen bekannt. Dieses enthält ein aus zwei Seitenteilen und Querstreben zusammengesetztes Gestell mit einem darauf angeordneten Auflageteil. Das als Polsterauflage ausgebildete U-förmige Auflageteil weist zwei seitliche Schulterauflagen und eine mittige Ausnehmung für den Kopf auf. Ein derartiges Übungsgerät ermöglicht eine sichere und stabile Kopfüber-Haltung zur Durchführung diverser Übungen in Umkehrstellung ohne Druck auf Hals und Wirbelsäule. Zu derartigen Übungsgeräten werden im Internet entsprechende Lehr- oder Instruktionsvideos angeboten, die auf Handys oder Tablets abgespielt werden können und speziell auf die Geräte abgestimmte Übungen und Anleitungen zeigen.

Aufgabe der Erfindung ist es, eine kostengünstige und einfach herstellbare Vorrichtung zur Halterung eines Handys oder Tablets an einem Übungsgerät für Kopf-, Hand- und Schulterstandübungen und ein Übungsgerät mit einer derartigen Vorrichtung zu schaffen, die auch das Betrachten von Lehr- oder Instruktionsvideos während der Durchführung von Übungen in einer Umkehrstellung ermöglichen.

Diese Aufgabe wird durch eine Vorrichtung mit den Merkmalen des Anspruchs 1 und durch ein Übungsgerät mit den Merkmalen des Anspruchs 9 gelöst. Vorteilhafte Ausgestaltungen der Erfindung sind in den Unteransprüchen angegeben.

Die erfindungsgemäße Vorrichtung zur Halterung eines Handys oder Tablets an einem Übungsgerät für Kopf-, Hand- und Schulterstandübungen weist eine Halteeinrichtung mit einer geneigten vorderen Auflage und einer zur vorderen Auflage entgegengesetzt geneigten hinteren Auflage zur Halterung des Handys oder Tablets in zwei entgegengesetzt geneigten Stellungen auf. Die Halteeinrichtung kann durch zwei voneinander beabstandete Halteteile oder einen einzelnen Haltekörper gebildet sein. Die Halteteile oder der Haltekörper enthalten an ihrer Unterseite eine schlitzförmige Aussparung zur Montage an einem Übungsgerät. Dadurch können die Halteteile oder der Haltekörper einfach auf eine Querstrebe des Übungsgeräts aufgesteckt werden und ein Handy oder Tablet kann einfach zwischen einer ersten Stellung zur Betrachtung eines Videos in einer sitzenden Position und einer zweiten Stellung zur Betrachtung eines Videos in einer Überkopfstellung bewegt werden. Somit wird auch das Betrachten von Lehr- oder Instruktionsvideos während der Durchführung von Übungen in einer Sitz- und Umkehrstellung ermöglicht.

Die beiden Halteteile sind einfach herstellbar und können an die Abmessungen des Handys oder Tablets angepasst auf eine Querstrebe eines Übungsgeräts aufgesetzt werden.

Die vordere Auflage kann durch zwei vordere Auflageflächen an den beiden gesonderten Halteteilen oder durch eine einzige vordere Auflagefläche an dem einzelnen Haltekörper gebildet sein. Die hintere Auflage kann durch zwei hintere Auflageflächen an den beiden gesonderten Halteteilen oder eine einzige hintere Auflagefläche an dem einzelnen Haltekörper gebildet sein.

Vorzugsweise sind die vorderen Auflageflächen unter einen Winkel α zwischen 40° und 50°, besonders bevorzugt unter einen Winkel α von 46°, gegenüber einer unteren Basisfläche der Halteteile oder des Haltekörpers geneigt, während die hinteren Auflageflächen unter einen Winkel β zwischen 65° und 75°, vorzugsweise unter einem Winkel β von 69° gegenüber einer unteren Basisfläche der Halteteile oder des Haltekörpers geneigt sind. Die vorderen Auflageflächen und die hinteren Auflageflächen können aber auch denselben Neigungswinkel gegenüber der Basisfläche aufweisen.

In einer weiteren vorteilhaften Ausführung weisen die Halteteile oder der Haltekörper an der Unterseite ihrer vorderen und hinteren Auflageflächen entsprechende Anlagen zur Vermeidung eines Abgleitens des Handys oder Tablets auf. Die Anlagen können als nasen- oder hakenförmige Vorsprünge ausgeführt sein. Um ein Verschieben des Handys oder Tablets zwischen den beiden Stellungen zu erleichtern, können die Halteteile oder der Haltekörper eine obere Abrundung zwischen den vorderen und hinteren Auflageflächen aufweisen.

Die beiden Halteteile sind vorzugsweise als zwei separate Bauteile ausgeführt. Diese können aber auch durch ein beispielsweise stangenförmiges Verbindungselement miteinander verbunden sein.

Die Erfindung betrifft außerdem ein Übungsgerät für Kopf-, Hand- und Schulterstandübungen mit einem Gestell, einem auf dem Gestell angeordneten Auflageteil und einer vorstehend beschriebenen Vorrichtung zur Halterung eines Handys oder Tablets, die an dem Gestell angeordnet ist. Die Vorrichtung zur Halterung des Handys oder Tablets kann als gesondertes Bauteil ausgebildet und lösbar an dem Gestell angeordnet sein. Sie kann aber auch z.B. durch entsprechende Ausgestaltung einer Querstrebe des Gestells in das Gestell integriert sein. So kann z.B. eine Querstrebe bereits mit einer integrierten Handhalterung versehen sein.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein Übungsgerät für Kopf-, Hand- und Schulterstandübungen;
- **Figur 2**: das Übungsgerät von Figur 1 mit einer angedeuteten Person in einer Überkopf-Stellung;
- **Figur 3**: eine Detailansicht des in Figur 1 gezeigten Übungsgeräts mit einem ersten Ausführungsbeispiel einer Vorrichtung zur Halterung eines Handys oder Tablets;
- **Figur 4**: zwei Halteteile der in Figur 3 gezeigten Vorrichtung zur Halterung eines Handys oder Tablets;
- **Figur 5**: die beiden in Figur 4 gezeigten Halteteile mit einem Handy in einer ersten Haltestellung;
- **Figur 6**: die beiden in Figur 4 gezeigten Halteteile mit einem Handy in einer zweiten Haltestellung;
- **Figur 7**: ein zweites Ausführungsbeispiel einer Vorrichtung zur Halterung eines Handys oder Tablets an einem in Figur 1 gezeigten Übungsgerät und
- **Figur 8**: ein drittes Ausführungsbeispiel einer Vorrichtung zur Halterung eines Handys oder Tablets an einem in Figur 1 gezeigten Übungsgerät.

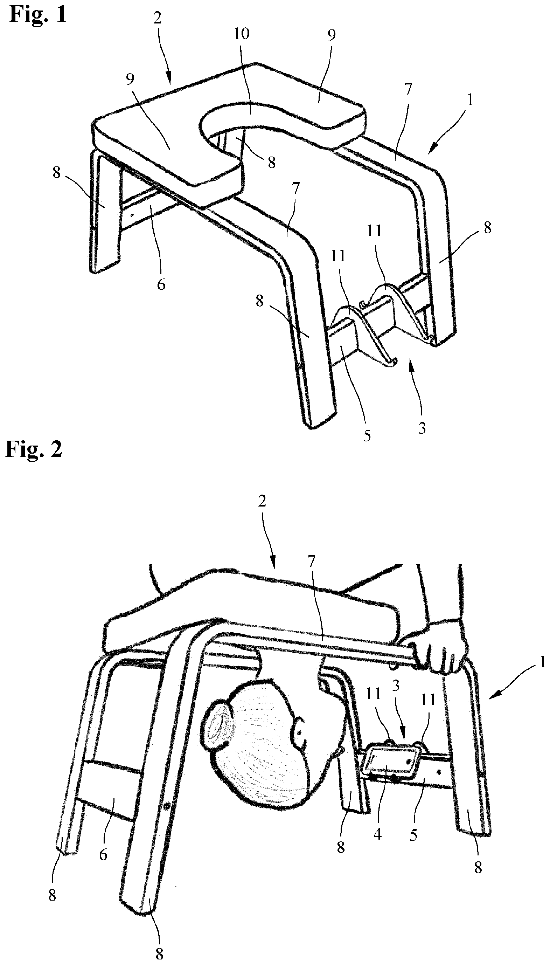

In den Figuren 1 und 2 ist ein Übungsgerät für Kopf-, Hand- und Schulterstandübungen mit einem Gestell 1, einem als Polsterauflage ausgebildeten Auflageteil 2 und einer Vorrichtung 3 zur Halterung eines in Figur 2 dargestellten Handys oder Tablets 4 gezeigt. Ein derartiges Übungsgerät ermöglicht eine sichere und stabile Kopfüber-Haltung ohne Druck auf Hals und Wirbelsäule. So kann z.B. eine in Figur 2 schematisch dargestellte Umkehrstellung mit nach unten ragendem Kopf zur Durchführung diverser Übungen einfach und sicher eingenommen werden.

Wie aus Figur 1 hervorgeht, besteht das Gestell 1 bei der gezeigten Ausführung aus zwei über Querstreben 5 und 6 miteinander verbundenen Seitenteilen, die jeweils einen horizontalen Holm 7 und zwei nach unten ragende Stützen oder Füße 8 aufweisen. Bei dem gezeigten Ausführungsbeispiel sind die beiden Seitenteile mit jeweils einem horizontalen Holm 7 und zwei schräg nach vorne bzw. hinten leicht geneigten Füßen 8 aus einem durchgehenden, schichtverleimten Holzteil gebogen und über die Querstreben 5 und 6 miteinander verbunden. Die beiden Seitenteile sind über eine vordere Querstrebe 5 und eine hintere Querstrebe 6 miteinander verbunden. Zur Erhöhung der Stabilität kann zwischen den beiden Holmen 7 eine weitere Querstrebe vorgesehen ein.

Das auf den beiden Holmen 7 des Gestells 1 angeordnete Auflageteil 2, das vorzugsweise aus einem mit einem Bezug versehenen Schaumstoff gefertigt ist, weist eine U-Form mit zwei seitlichen Auflagebereichen 9 für die Schulter und einer mittigen Aussparung 10 für den Kopf auf. Dadurch wird eine sichere und komfortable Auflage für die beiden Schultern geschaffen. Das Auflageteil 2 ist im Bereich der hinteren Querstrebe 6 angeordnet, so dass der Blick bei einem in Figur 2 schematisch dargestellten Kopfstand auf die vordere Querstrebe 5 gerichtet ist.

Die Vorrichtung 3 zur Halterung eines Handys oder Tablets besteht aus einer auf die vordere Querstrebe 5 des Übungsgeräts aufsetzbaren Halteeinrichtung, die eine geneigte vordere Auflage zur Halterung des Handys oder Tablets 4 in einer ersten Stellung sowie eine entgegengesetzt geneigte hintere Auflage zur Halterung des Handys oder Tablets in einer zweiten Stellung aufweist.

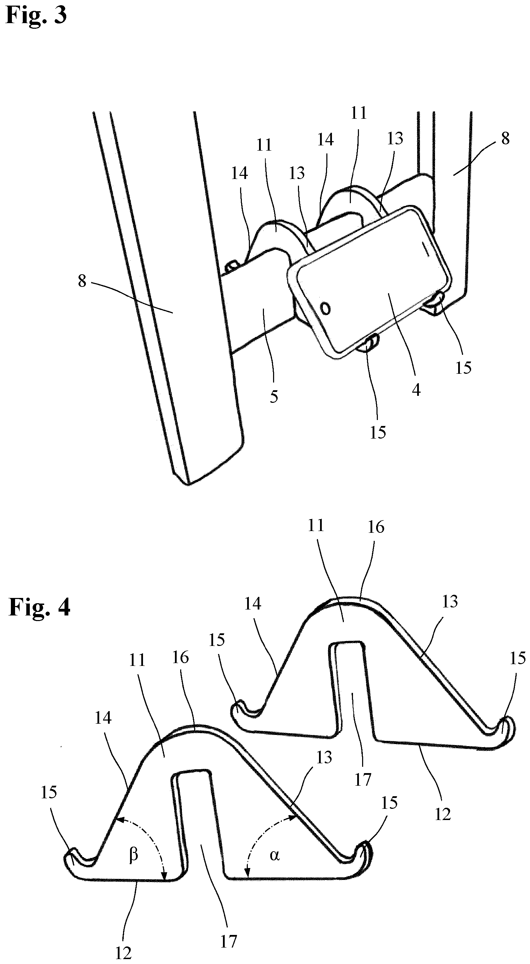

Bei der in den Figuren 1 bis 6 gezeigten Ausführung wird die Halteeinrichtung durch zwei voneinander beabstandet auf die Querstrebe 5 aufsetzbare plattenförmige Halteteile 11 gebildet, die gemäß Figur 4 eine Dreiecksform mit einer unteren Basisfläche 12, einer unter einem Winkel α von 46° gegenüber der Basisfläche 12 geneigten vorderen Auflagefläche 13 und einer gegenüber der horizontalen Basisfläche 12 unter einem Winkel β von 69° entgegengesetzt zur vorderen Auflagefläche 13 geneigten hinteren Auflagefläche 14 aufweisen.

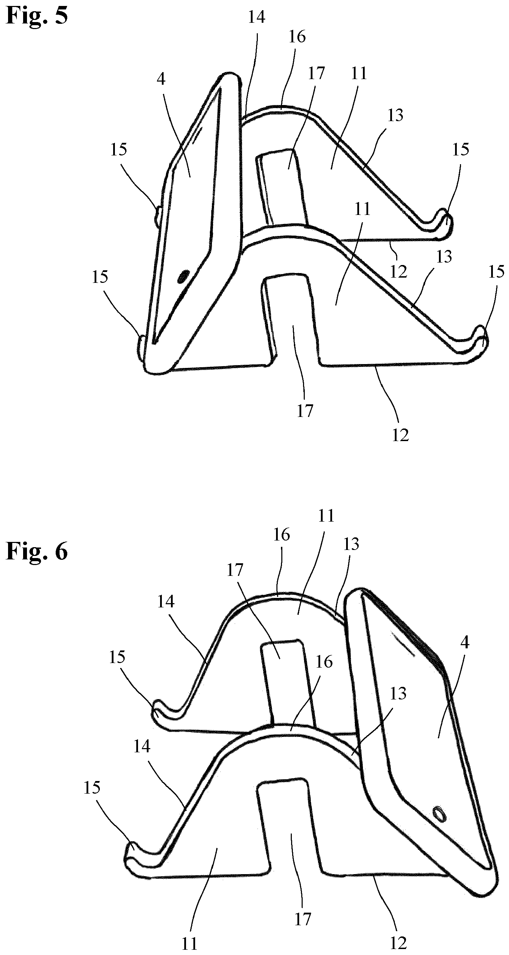

Die beiden Halteteile 11 weisen an der Unterseite der beiden Auflageflächen 13 und 14 nasen- oder hakenförmige Anlagen 15 zur Verhinderung eines Abgleitens des Handys oder Tablets 3 auf. Durch die Auflageflächen 13 und 14 mit den beiden Anlagen 15 der beiden voneinander beabstandeten Halteteile 11 werden die in verschiedene Richtungen geneigten Auflagen zur Halterung des Handys oder Tablets 4 in zwei unterschiedlichen Stellungen gebildet. Der Übergang zwischen der vorderen Anlagefläche 13 und der hinteren Anlagefläche 14 an der Spitze der dreieckige Halteteile 11 ist mit einer Abrundung 16 versehen, so dass das Handy oder Tablet 4 einfach zwischen einer in den Figuren 2 und 5 gezeigten Stellung an der Innenseite der Querstrebe 5 zur Betrachtung eines Videos in einer Überkopfstellung und einer in den Figuren 3 und 6 gezeigten Stellung an der Außenseite der Querstrebe 5 zur Betrachtung eines Videos in einer vor dem Übungsgerät sitzenden Position verschoben werden kann. Dadurch können Übungsvideos in verschiedenen Stellungen verfolgt werden.

Zur Befestigung der beiden Halteteile 11 auf der vorderen Querstrebe 5 enthalten die beiden identisch ausgeführten Halteteile 11 an der Unterseite eine zum Aufstecken auf die Querstrebe 5 ausgebildete schlitzförmige Aussparung 17. Die schlitzförmige Aussparung 17 hat eine an die Dicke der Querstrebe 5 angepasste Breite und ist gegenüber der Basisfläche 12 derart geneigt, dass die Basisfläche 12 beim Aufsetzten des Halteteils 11 auf die Querstrebe horizontal angeordnet ist.

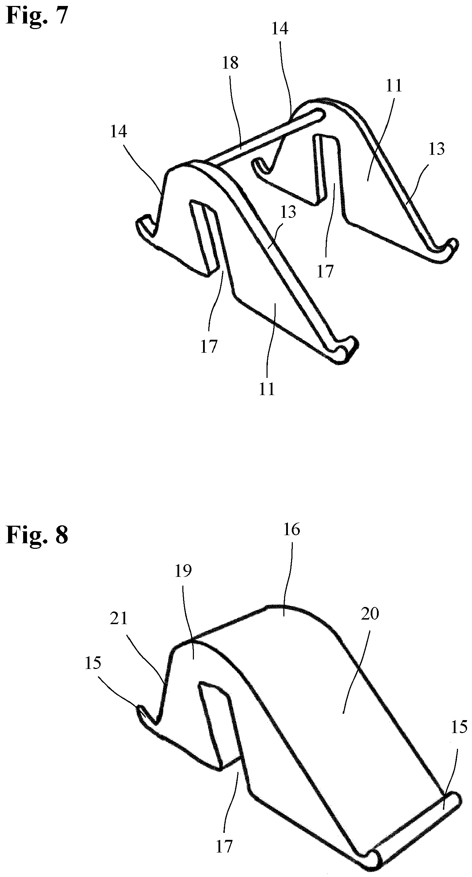

Bei der in Figur 1 bis 6 dargestellten Vorrichtung 3 zur Halterung eines Handys oder Tablets 4 wird die Halteeinrichtung durch die beiden z.B. aus einer Holzplatte durch Aussägen oder Ausstanzen einfach herstellbare Halteteile 11 gebildet, die in einem an das jeweilige Handy oder Tablet 4 angepassten Abstand einfach auf die vordere Querstrebe 5 aufgesetzt werden können. Die beiden Halteteile 11 können aber auch durch ein stangenförmiges Verbindungselement 18 oder ein anderes Verbindungsmittel miteinander verbunden sein, wie dies in Figur 7 gezeigt ist.

Bei einer in Figur 8 dargestellten weiteren Ausführung kann die Halteeinrichtung aber auch durch einen einzelnen Haltekörper 19 mit einer vorderen geneigten Auflagefläche 20 und einer zur vorderen Auflagefläche 20 entgegengesetzt geneigten hinteren Auflagefläche 21 ausgebildet sein. Wie bei der zuvor beschriebenen Ausführung weist die hier einteilig ausgebildete Halteeinrichtung an der Unterseite ihrer vorderen und hinteren Auflageflächen 20 und 21 ebenfalls vorstehende Anlagen 15 zur Verhinderung eines Abrutschens des Handys oder Tablets und eine obere Abrundung 16 zwischen den vorderen und hinteren Auflageflächen 20 und 21 auf. Der Haltekörper 19 enthält an seiner Unterseite außerdem eine schlitzförmige Aussparung 17 zum Aufsetzen des Haltekörpers 19 auf eine Querstrebe 5 eines in Figur 1 gezeigten Übungsgeräts.

## Patentansprüche

1. Vorrichtung (3) zur Halterung eines Handys oder Tablets (4) an einem Übungsgerät für Kopf-, Hand- und Schulterstandübungen mit einer Halteeinrichtung (11; 19), die zwei gesonderte Halteteile (11) oder einen einzelnen Haltekörper (19) mit einer geneigten vorderen Auflage (13; 20) und einer zur vorderen Auflage (13; 20) entgegengesetzt geneigten hinteren Auflage (14; 21) zur Halterung des Handys oder Tablets (4) in zwei entgegengesetzt geneigten Stellungen enthält, **dadurch gekennzeichnet, dass** die Halteteile (11) oder der Haltekörper (19) an ihrer Unterseite eine zum Aufstecken auf eine Querstrebe (5) des Übungsgeräts ausgebildete schlitzförmige Aussparung (17) enthalten.

2. Vorrichtung (3) nach Anspruch 1, **dadurch gekennzeichnet, dass** die vordere Auflage (13; 20) durch zwei vordere Auflageflächen (13) an den beiden gesonderten Halteteilen (11) oder eine einzige vordere Auflagefläche (20) an dem einzelnen Haltekörper (19) gebildet wird.

3. Vorrichtung (3) nach Anspruch 2, **dadurch gekennzeichnet, dass** die vorderen Auflageflächen (13, 20) unter einen Winkel α zwischen 40° und 50° gegenüber einer unteren Basisfläche (12) der Halteteile (11) oder des Haltekörpers (19) geneigt sind.

4. Vorrichtung (3) nach einem der Ansprüche 1 bis 3, **dadurch gekennzeichnet, dass** die hintere Auflage (14; 21) durch zwei hintere Auflageflächen (14) an den beiden gesonderten Halteteilen (11) oder eine einzige hintere Auflagefläche (21) an dem einzelnen Haltekörper (19) gebildet wird.

5. Vorrichtung (3) nach Anspruch 4, **dadurch gekennzeichnet, dass** die hinteren Auflageflächen (14; 21) unter einen Winkel β zwischen 65° und 75°gegenüber einer unteren Basisfläche (12) der Halteteile (11) oder des Haltekörpers (19) geneigt sind.

6. Vorrichtung (3) nach einem der Ansprüche 1 bis 5, **dadurch gekennzeichnet, dass** die Halteteile (11) oder der Haltekörper (19) an der Unterseite ihrer vorderen und hinteren Auflageflächen (13, 14; 20, 21) Anlagen (15) zur Verhinderung eines Abgleitens des Handys oder Tablets (4) aufweisen.

7. Vorrichtung (3) nach einem der Ansprüche 1 bis 6, **dadurch gekennzeichnet, dass** die Halteteile (11) oder der Haltekörper (19) eine obere Abrundung (16) zwischen den vorderen und hinteren Auflageflächen (13, 14; 20, 21) aufweisen.

8. Vorrichtung (3) nach einem der Ansprüche 1 bis 7, **dadurch gekennzeichnet, dass** die Halteteile (11) durch ein Verbindungselement (18) miteinander verbunden sind.

9. Übungsgerät für Kopf-, Hand- und Schulterstandübungen mit einem Gestell (1) und einem auf dem Gestell (1) angeordneten Auflageteil (2), **dadurch gekennzeichnet, dass** an dem Gestell (1) eine Vorrichtung (3) zur Halterung eines Handys oder Tablets (4) nach einem der Ansprüche 1 bis 8 angeordnet ist.

10. Übungsgerät nach Anspruch 9, **dadurch gekennzeichnet, dass** die Vorrichtung (3) zur Halterung eines Handys oder Tablets lösbar an dem Gestell (1) angeordnet ist.

11. Übungsgerät nach Anspruch 9, **dadurch gekennzeichnet, dass** die Vorrichtung (3) zur Halterung eines Handys oder Tablets in das Gestell (1) integriert ist.

## Claims

1. Device (3) for holding a mobile phone or tablet (4) on an exercise device for head, hand and shoulder stand exercises, having a holding device (11; 19) which contains two separate holding parts (11) or a single holding body (19) with an inclined front support (13; 20) and a rear support (14; 21) which is inclined in the opposite direction to the front support (13; 20) for holding the mobile phone or tablet (4) in two oppositely inclined positions, **characterized in that** the holding parts (11) or the holding body (19) contain a slot-shaped recess (17) on their underside which is designed to be plugged onto a cross strut (5) of the exercise device.

2. Device (3) according to claim 1, **characterized in that** the front support (13; 20) is formed by two front support surfaces (13) on the two separate holding parts (11) or a single front support surface (20) on the single holding body (19).

3. Device (3) according to claim 2, **characterized in that** the front support surfaces (13, 20) are inclined at an angle α between 40° and 50° relative to a lower base surface (12) of the holding parts (11) or of the holding body (19).

4. Device (3) according to one of claims 1 to 3, **characterized in that** the rear support (14; 21) is formed by two rear support surfaces (14) on the two separate holding parts (11) or a single rear support surface (21) on the single holding body (19).

5. Device (3) according to claim 4, **characterized in that** the rear support surfaces (14; 21) are inclined at an angle β between 65° and 75° with respect to a lower base surface (12) of the holding parts (11) or the holding body (19).

6. Device (3) according to one of claims 1 to 5, **characterized in that** the holding parts (11) or the holding body (19) have attachments (15) on the underside of their front and rear support surfaces (13, 14; 20, 21) to prevent the mobile phone or tablet (4) from sliding off.

7. Device (3) according to one of claims 1 to 6, **characterized in that** the holding parts (11) or the holding body (19) have an upper rounding (16) between the front and rear support surfaces (13, 14; 20, 21).

8. Device (3) according to one of claims 1 to 7, **characterized in that** the holding parts (11) are connected to each other by a connecting element (18).

9. Exercise device for head, hand and shoulder stand exercises with a frame (1) and a support part (2) arranged on the frame (1), **characterized in that** a device (3) for holding a mobile phone or tablet (4) according to one of claims 1 to 8 is arranged on the frame (1).

10. Exercise device according to claim 9, **characterized in that** the device (3) for holding a mobile phone or tablet is detachably arranged on the frame (1).

11. Exercise device according to claim 9, **characterized in that** the device (3) for holding a mobile phone or tablet is integrated into the frame (1).

## Revendications

1. Dispositif (3) de maintien d'un téléphone portable ou d'une tablette (4) contre un appareil d'exercice pour des exercices de posture de tête, de mains et d'épaules avec un équipement de maintien (11; 19) qui contient deux pièces de maintien (11) séparées ou un unique corps de maintien (19) avec un support avant (13; 20) incliné et un support arrière (14; 21) incliné à l'opposé du support avant (13; 20) pour le maintien du téléphone portable ou de la tablette (4) dans deux positions inclinées à l'opposé, **caractérisé en ce que** les pièces de maintien (11) ou le corps de maintien (19) contiennent au niveau de leur côté inférieur un évidement (17) en forme de fente et conçu pour un enfichage sur une barre transversale (5) de l'appareil d'exercice.

2. Dispositif (3) selon la revendication 1, **caractérisé en ce que** le support avant (13; 20) est formé par deux surfaces de support avant (13) contre les deux pièces de maintien (11) séparées ou par une unique surface de support avant (20) contre l'unique corps de maintien (19).

3. Dispositif (3) selon la revendication 2, **caractérisé en ce que** les surfaces de support avant (13; 20) sont inclinées selon un angle α entre 40° et 50° par rapport à une surface de base (12) inférieure des pièces de maintien (11) ou du corps de maintien (19).

4. Dispositif (3) selon l'une des revendications 1 à 3, **caractérisé en ce que** le support arrière (14; 21) est formé par deux surfaces de support arrière (14) contre les deux pièces de maintien (11) séparées ou par une unique surface de support arrière (21) contre l'unique corps de maintien (19).

5. Dispositif (3) selon la revendication 4, **caractérisé en ce que** les surfaces de support arrière (14; 21) sont inclinées selon un angle β entre 65° et 75° par rapport à une surface de base (12) inférieure des pièces de maintien (11) ou du corps de maintien (19).

6. Dispositif (3) selon l'une des revendications 1 à 5, **caractérisé en ce que** les pièces de maintien (11) ou le corps de maintien (19) présentent contre le côté inférieur de leurs surfaces de support avant et arrière (13, 14; 20, 21) des installations (15) destinées à empêcher un glissement du téléphone portable ou de la tablette (4).

7. Dispositif (3) selon l'une des revendications 1 à 6, **caractérisé en ce que** les pièces de maintien (11) ou le corps de maintien (19) présentent un arrondissement (16) supérieur entre les surfaces de support avant et arrière (13, 14; 20, 21).

8. Dispositif (3) selon l'une des revendications 1 à 7, **caractérisé en ce que** les pièces de maintien (11) sont reliées ensemble par un élément de liaison (18).

9. Appareil d'exercice pour des exercices de posture de tête, de mains et d'épaules avec une armature (1) et une pièce de support (2) agencée sur l'armature (1), **caractérisé en ce que** le dispositif (3) de maintien d'un téléphone portable ou d'une tablette (4) selon l'une des revendications 1 à 8 est agencé contre l'armature (1).

10. Appareil d'exercice selon la revendication 9, **caractérisé en ce que** le dispositif (3) de maintien d'un téléphone portable ou d'une tablette est agencé de façon amovible contre l'armature (1).

11. Appareil d'exercice selon la revendication 9, **caractérisé en ce que** le dispositif (3) de maintien d'un téléphone portable ou d'une tablette est intégré jusque dans l'armature (1).
